# EUROPEAN PATENT SPECIFICATION

(11) **EP 3 283 445 B1**
(45) Date of publication and mention of the grant of the patent: **19.08.2020**
(21) Application number: 16717227.9
(22) Date of filing: 07.04.2016
(51) Int. Cl.: C03B 23/045, C03B 23/049

(54) **GLASS TUBE BI-DIRECTIONAL STRETCHING METHOD AND TOOL**
BIDIREKTIONALES GLASROHRSTRECKVERFAHREN UND WERKZEUG
PROCÉDÉ D'ÉTIREMENT BIDIRECTIONNEL DE TUBE DE VERRE ET OUTIL

(30) Priority: 16.04.2015 US 201562148447 P
(43) Date of publication of application: 21.02.2018
(73) Proprietor: Corning Incorporated, Corning, New York 14831 (US)
(72) Inventor: DANNOUX, Thierry Luc Alain, 77210 Avon (FR); GOLYATIN, Vladislav Yuryevich, 77210 Avon (FR); POISSY, Stephane, 91800 Brunoy (FR)
(74) Representative: Elkington and Fife LLP
(86) International application number: PCT/US2016/026384
(87) International publication number: WO 2016/168053

(56) References cited:
- WO-A1-2013/187212
- FR-A- 1 267 805
- JP-A- H07 165 432
- JP-A- S52 127 981
- Thierry Luc Alain Dannoux ET AL: "JPS52127981A -PROCESS FOR PRODUCING HOLLOW OBJECT Translated: Doc-Number", , 19 April 1976 (1976-04-19), XP055657661, Retrieved from the Internet: URL:http://tfly.internal.epo.org/index.htm l?num=JPS52127981&type=PN&BNSDocId=JP%20%2 0%20%20%20%20S52127981A%20%20I%20&BNSPage= 1&FAM1=JPS52127981/TXPJA [retrieved on 2020-01-14]

## Description

### BRIEF SUMMARY

The present disclosure relates generally to glass sleeves and shaping tools for forming glass sleeves.

Methods for shaping glass tubes and corresponding tools are e.g. know from JP S52-127981.

Optionally, a method for reforming a glass sleeve may comprise providing a tube made of glass. The tube may have a longitudinal axis and an inner curved surface enclosing a space. The method may further comprise heating the substantially cylindrical tube to a temperature within the softening range of the glass, and then introducing a shaping tool having at least two opposing fingers into the enclosed space. The at least two opposing fingers may extend generally radially. The method may further comprise moving the at least two opposing fingers against the inner surface along a radial axis to reform the tube, to form a first portion. The opposing fingers may be moved apart, deviating from the radial axis to reform the tube to form a second portion.

In another embodiment, a shaping tool comprises a pair of opposing fingers. Each finger may extend generally radially and may comprise a tip configured to contact a glass surface. The shaping tool may further comprise a first articulating device that may be connected to the pair of opposing fingers. The articulating device may be configured to move along a radial axis and deviate from the radial axis. The shaping tool may further comprise a bi-conical ramp. The bi-conical ramp may be configured to move along a longitudinal axis in coordination with the first articulating device's movement along the radial axis. Optionally, the movement of the bi-conical ramp along the longitudinal axis may drive the pair of opposing fingers apart, at an angle to the radial axis. The radial and longitudinal axes may be substantially orthogonal to each other.

Additional features and advantages of the present disclosure will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF SEVERAL VIEWS OF THE DRAWINGS

The following is a description of the figures in the accompanying drawings. The figures are not necessarily to scale, and certain features and certain views of the figures may be shown exaggerated in scale or in schematic in the interest of clarity or conciseness.
FIG. 1A shows a schematic view of a cross-section through a shaping tool and a glass tube, prior to reformation.
FIG. 1B shows a schematic view of a cross-section through a shaping tool and a glass tube, as the tube begins to be reformed into a sleeve.
FIG. 1C shows a schematic view of a cross-section through a shaping tool and a glass tube, as the tube is further reformed into a sleeve.
FIG. 1D shows a schematic view of a cross-section through a shaping tool and a glass tube, as the tube is further reformed into a sleeve, with the shaping tool fingers now stretching the tube in another direction.
FIG. 1E shows a schematic view of a cross-section through a shaping tool and a glass sleeve after reformation.
FIG. 2A shows a schematic perspective view of a shaping tool.
FIG. 2B shows a schematic perspective view of a shaping tool and a bi-conical ramp.
FIG. 2C shows a schematic view of a cross-section through a shaping tool, a bi-conical ramp, and a glass tube, prior to reformation.
FIG. 2D shows a schematic view of a cross-section through a shaping tool, a bi-conical ramp, and a glass sleeve, after reformation.
FIG. 3 shows a schematic view of a cross-section through a shaping tool used to reform a glass tube into a glass sleeve with a curved portion.
FIG. 4 is a perspective view of a glass sleeve formed by a shaping tool.
FIG. 5 is a perspective view of another glass sleeve formed by a shaping tool.
FIG. 6A shows a schematic top plan view of a shaping tool and glass tube, prior to reformation.
FIG. 6B shows a schematic longitudinal section view of a shaping tool and a glass tube prior to reformation.
FIG. 6C shows a schematic top plan view of a shaping tool and glass tube, as the tube is reformed into a sleeve.
FIG. 6D shows a schematic longitudinal section view of a shaping tool and glass tube, as the tube is reformed into a sleeve.
FIG. 7 is a schematic perspective view of a glass tube and a support structure upon which the glass tube may be reformed.
FIG. 8 is an isolated plan view of a forming rod according to one embodiment.
FIG. 9 is a schematic plan view of a mechanism for moving the forming rod as shown in FIG. 8; the forming rod is shown in retracted (inside) and advanced (outside) positions.
FIG. 10 is an alternative schematic plan view of the apparatus of FIG. 9, readjusted for forming a flatter sleeve than would be made by the apparatus adjusted as in FIG. 9.

The following reference characters are used in this specification:
- 10: Tube made of glass
- 12: Glass sleeve
- 14: Inner curved surface (of 10)
- 16: Space (within 10)
- 20: Shaping tool
- 22: Finger (of 20)
- 23: Fingertip (of 22)
- 24: Finger (of 20)
- 25: Fingertip (of 24)
- 26: Finger (of 20)
- 27: Fingertip (of 26)
- 28: Finger (of 20)
- 29: Fingertip (of 28)
- 30: Flattened portion (of 12)
- 32: Flattened portion (of 12)
- 34: Flattened portion (of 12)
- 36: Flattened portion (of 12)
- 40: Curved portion (of 12)
- 42: Curved portion (of 12)
- 50: Support structure
- 52: Opening (within 50)
- 61: Flexure
- 62: Flexure
- 70: Bi-conical ramp
- 72: Articulating device
- 73: Stage
- 74: Articulating device
- 75: Stage
- 80: Non-circular cross-section (of 12)
- 82: Length (of 12)
- 84: Internal opening (of 12)
- 86: Glass thickness (of 12)
- 88: Longitudinal axis
- 90: Radial axis
- 92: Forming rod
- 93: Rotation arm
- 94: Pivot
- 96: Stiffening rib
- 98: Round finger
- 99: A set of linkages
- 100: Pivot
- 101: Movable pivot
- 102: Center of the glass sleeve
- 103: Slot
- 104: Plate
- 106: Plate

The foregoing summary, as well as the following detailed description of certain inventive techniques, will be better understood when read in conjunction with the figures. It should be understood that the claims are not limited to the arrangements and instrumentality shown in the figures. Furthermore, the appearance shown in the figures is one of many ornamental appearances that can be employed to achieve the stated functions of the apparatus.

### DETAILED DESCRIPTION

In the following detailed description, numerous specific details may be set forth in order to provide a thorough understanding of embodiments described herein. However, it will be clear to one skilled in the art when embodiments may be practiced without some or all of these specific details. In other instances, well-known features or processes may not be described in detail so as not to unnecessarily obscure the description. In addition, like or identical reference numerals may be used to identify common or similar elements.

A high quality monolithic glass sleeve may be formed from a high quality monolithic glass tube, where the front side of the glass sleeve optionally may serve as the front cover and the back side of the glass sleeve optionally may serve as the back cover for an electronic device. The monolithic glass sleeve may have a cross-sectional profile that may accommodate a flat display. In general, this cross-sectional profile may have flat sides that may be arranged in parallel to the flat display. The flatness of the flat sides optionally may be configured to meet stringent requirements specified by the electronic device manufacturers.

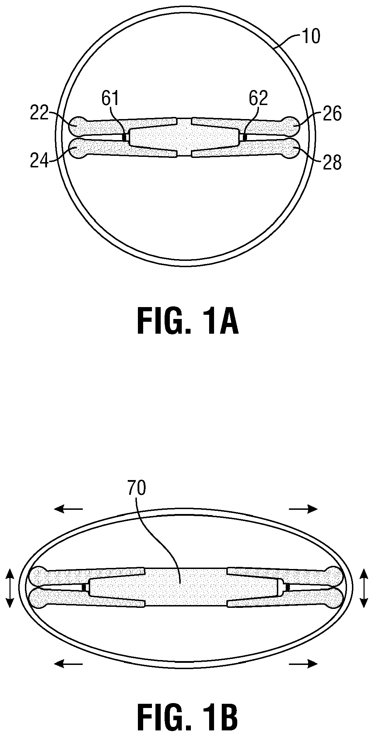

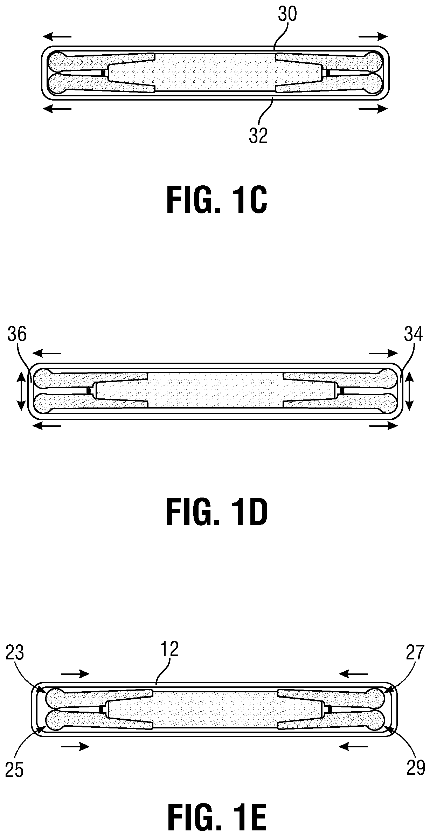

FIGS. 1A-1E, 2A-2D, 3, and 6A-6B each illustrate a shaping tool 20 of the present disclosure for reforming a tube 10 (shown in FIGS. 1A, 2C, 6A, and 7) made of a glass material. The glass material may be glass, or plastic. The tube 10 can be in various shapes, such as a substantially cylindrical, for example. The substantially cylindrical tube 10 may be round, oval, or other shape. The tube 10 may be short or long. Optionally in any embodiment, the shaping tool 20 may be introduced from one end for a short or a long tube. Optionally in any embodiment, for a short tube, the shaping tool 20 may be introduced from both ends, which may help to increase the allowable stretching force and may enable users to stretch the short tube faster or at a higher viscosity. Optionally, the glass tube 10 may be made from an ion-exchangeable glass. Optionally, an ion-exchangeable glass may contain relatively small alkali metal or alkaline-earth metal ions that may be exchanged for relatively large alkali or alkaline earth metal ions. An ion-exchangeable glass may be alkali-aluminosilicate glass or alkali-aluminoborosilicate glass. Examples of ion-exchangeable glass can be found in the patent literature, e.g., U.S. Pat. No. 7,666,511 (Ellison et al., Nov. 20, 2008) U.S. Pat. No. 4,483,700 (Forker, Jr. et al., Nov. 20, 1984), and U.S. Pat. No. 5,674,790 (Araujo, Oct. 7, 1997), and are also available from Corning Incorporated under the trademark GORILLA® glass.

The shaping tool may comprise fingers **22, 24, 26, 28.** The fingers **22, 24, 26, 28** each have fingertips **23, 25, 27, 29** that may be formed of any suitable material for contacting a glass surface, such as: steel coated with hexagonal boron nitride(hBN), air bearings (optionally sintered air bearings made of a refractory material, for example graphite), a nickel-based alloy (e.g., Inconel), or another material. The fingers **22, 24, 26, 28** may be formed of the same material as the fingertips **23, 25, 27, 29.** Optionally, the fingertip material may be a material that will introduce few defects into the glass material during contact between the fingertips **23, 25, 27, 29** and the glass tube **10.** In addition, the fingertip material selected may have a coefficient of thermal expansion similar to or higher than the glass material, or otherwise is arranged (as in the case of an air bearing) to ensure that the glass does not shrink sufficiently to introduce stresses in the glass or to reform or otherwise interfere with the shaping tool **20** as the glass cools after reformation.

The fingertip material may have sufficiently high thermal properties that it will not substantially deform or be degraded at the temperatures used to reform the glass tube **10.** As one particular example, if the fingertip material is an air bearing made of graphite , care should be taken that the gas used in the air bearing does not support undue oxidation of the graphite under the temperature and other conditions encountered by the shaping tool **20.** The gas used in the air bearing is not limited to air or a constituent of air. For example, to prevent oxidation a gas that is inert under the processing conditions, for example, nitrogen, a noble gas, or a combination of two or more of these, can be used.

The shaping tool may comprise flexures **61, 62**. The flexures **61**, **62** may be formed of any suitable material that provides sufficient stiffness for geometrical control at elevated reforming temperatures of 700-950 degrees Celsius. For example, the flexures **61**, **62** may be formed of a refractory alloy, steel coated with hexagonal boron nitride (hBH), a nickel-based alloy (e.g., Inconel), or another material. Optionally, the flexures **61, 62** may be formed by electric discharge machining (EDM).

As shown in FIG. 1A, a substantially cylindrical glass tube **10** may be provided. The glass tube **10** may be polished or otherwise treated to reduce or remove interior imperfections. The glass tube **10** may be heated to a temperature corresponding to a point within the glass softening range. The glass softening range may comprise, for example, the dilatometric softening point or the Littleton softening point. As shown in FIG. 1A, the shaping tool **20** may be introduced into the space **16** within the inner curved surface **14** of the glass tube **10.** As shown in FIGS. 1A-1E, the fingers of the shaping tool **22, 24, 26, 28** may be moved against the inner curved surface **14** to reform the glass tube **10** into a glass sleeve **12.**

Optionally, the shaping tool fingers **22, 24, 26, 28** may contact the inner curved surface **14** of the glass tube **10** only at the fingertips **23, 25, 27, 29,** to limit contact between the shaping tool **20** and the glass tube **10** to smaller contact areas. Optionally, as shown in FIGS. 1B to 1C, two ends of the shaping tool **22, 24** and **26, 28** may be moved apart from each other and against opposing contact portions on the inner curved surface **14** of the glass tube **10,** to form a first flattened portion **30.**

Optionally, a second portion **34** will be formed. The second portion 34 may be a flattened portion. Optionally, flattened portions **32, 36**-opposing flattened portions **30, 34** maybe formed. As shown in FIG. 1D, the pairs of opposing fingers **22, 24** and **26, 28** may be moved apart from each other (i.e., finger **22** moved apart from finger **24** and finger **26** moved apart from finger **28**) and against opposing contact portions on the inner curved surface **14** of the glass tube **10,** to further reform the glass tube **10.** Optionally, the pairs of opposing fingers **22, 24** and **26, 28** may be moved apart from each other at the same time that the two ends of the shaping tool **22, 24** and **26, 28** are moved apart from each other. As shown in FIG. 1E, after the glass tube **10** has been reformed into a glass sleeve 12, the shaping tool **20** may be retracted by moving the fingertips 23, 25, 27, 29 away from the internal surfaces of the glass sleeve 12.

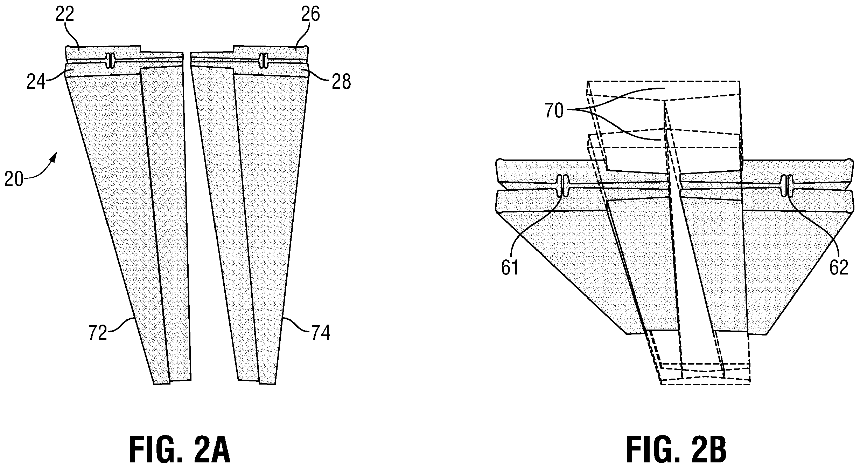

FIG. 2A shows another embodiment of a shaping tool 20 according to the present disclosure. The shaping tool 20 may comprise or be connected to a first articulating device 72 and a second articulating device 74. FIG. 2B shows how the bi-conical ramp 70 may be arranged relative to the shaping tool 20. The bi-conical ramp 70 may move along a longitudinal axis in coordination with the first and second articulating devices **72, 74,** such that the first and second articulating devices **72, 74** may repeatably and accurately drive the position of the fingertips **23, 25, 27, 29.** The bi-conical ramp **70** may drive the opening and closing of flexures **61, 62** at an angle to a radial axis. Opening of the flexures **61, 62** may reform the glass tube **10** at an angle to a radial axis. Reformation of the glass tube **10** at an angle to a radial axis may be referred to as "transversal stretching."

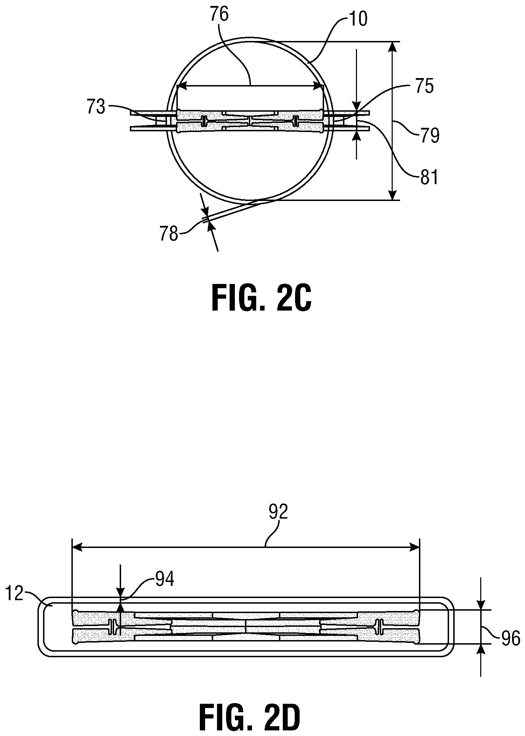

Closing of the flexures **61, 62** may allow for removal of the shaping tool **20** without contact between the shaping tool **20** and an internal surface of a reformed glass sleeve **12.** FIG. 2C shows how the shaping tool **20** may be arranged inside a glass tube **10.** The first and second articulating devices **72, 74** may be mounted upon first and second stages **73, 75.** The first and second stages **73, 75** may drive the first and second articulating devices **72, 74** apart along a radial axis to reform the glass tube **10.** FIG. 2D shows a possible arrangement of the shaping tool **20** and first and second articulating devices **72, 74** in relation to the bi-conical ramp **70** and first and second stages **73, 75** after a glass tube **10** has been reformed into a glass sleeve **12.** In the position shown in FIG. 2D, the shaping tool **20** may be removed without contacting an internal surface of the glass sleeve **12.**

Optionally, the deviation from the radial axis may be at an angle of approximately 90 degrees. Optionally, the shaping tool may comprise third and fourth opposing fingers. The third and fourth opposing fingers may extend generally radially. Optionally, the method may further comprise forming a third flattened portion opposing the first flattened portion and a fourth flattened portion opposing the second flattened portion. Optionally, the method may further comprise moving the first two opposing fingers in a first direction along the radial axis, and moving the third and fourth opposing fingers in a second direction along the radial axis, to form the first and third flattened portions. Optionally, the method may further comprise moving apart the first two opposing fingers, deviating from the radial axis, and moving apart the third and fourth opposing fingers, deviating from the radial axis, to form the second and fourth flattened portions.

Optionally, the substantially cylindrical tube may be heated to a temperature such that the glass viscosity is 10⁷-10^{9.5} P (poise). Such a temperature may be within the softening range of the glass. As used in the present disclosure, "softening range" refers to a range of possible viscosities at which the glass may be shaped, rather than a specific viscosity or softening point.

Optionally, the substantially cylindrical tube may have a length along the longitudinal axis and the shaping tool may be moved against the inner curved surface at a force of 0.5-10.0 N per cm length of the substantially cylindrical tube.

Optionally, the shaping tool may be made at least partially from one of the following materials: steel coated with hexagonal boron nitride; porous graphite air bearings; a nickel-based alloy; or Inconel.

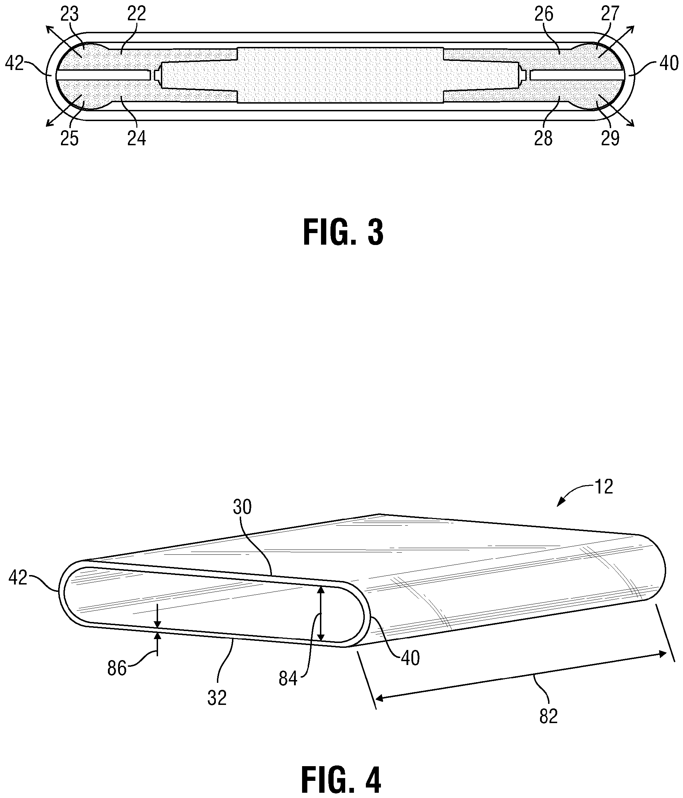

FIG. 3 shows a possible embodiment of a shaping tool **20** used to reform a glass tube **10** into a glass sleeve **12.** Optionally, the glass sleeve **12** may be formed with a first curved portion **40** and a second curved portion **42.** The shaping tool fingers **22, 24, 26, 28** may each comprise a fingertip **23, 25, 27, 28** having a curved cross-section configured to reform the glass tube **10** into a glass sleeve with a first curved portion **40** and a second curved portion **42.**

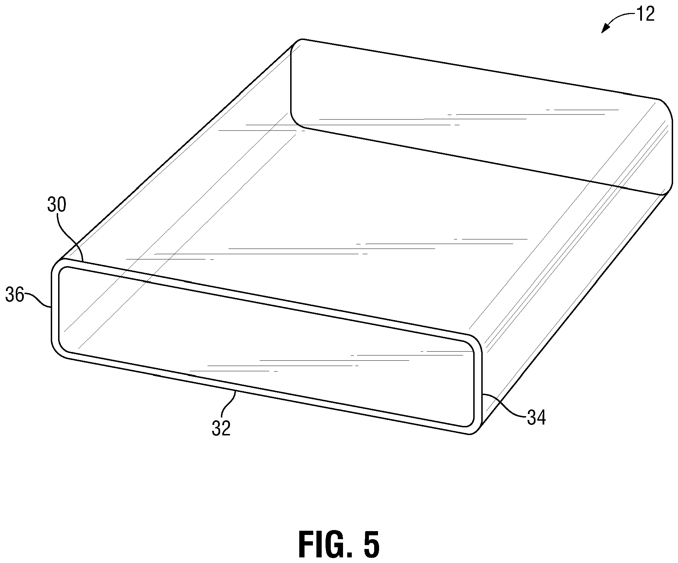

As used in the present disclosure, the term "sleeve" is used to describe a three-dimensional (3D), tubular substrate having a non-circular cross-section **80.** Exemplary glass sleeves **12** are depicted in FIGS. 4 and 5. Optionally, a glass sleeve **12** may have a cross-section that is either somewhat oval or somewhat-rectangular with rounded edges. Optionally, a glass sleeve **12** may comprise a length **82**, an internal opening **84**, and a glass thickness **86.** Optionally, a glass sleeve **12** may have at least one flattened portion **30** that is, or approaches being, optically flat.

Optionally, a method for producing a glass sleeve with a first flattened portion and a first curved portion may comprise providing a substantially cylindrical tube made of glass. The substantially cylindrical tube may have a longitudinal axis and an inner curved surface enclosing a space. The method may further comprise heating the substantially cylindrical tube to a temperature within the softening range of the glass, and then introducing a shaping tool having at least two opposing fingers into the enclosed space. The opposing fingers may extend generally radially. The method may further comprise moving the opposing fingers against the inner curved surface along a radial axis to reform the tube, to form the first flattened portion. The method may further comprise moving the opposing fingers apart, deviating from the radial axis, to reform the tube, to at least partially reshape the first curved portion.

Optionally, the substantially cylindrical tube may be heated to a temperature such that the glass viscosity is 10⁷-10^{9.5} P (poise). Such a temperature may be within the softening range of the glass.

Optionally, the substantially cylindrical tube may have a length along the longitudinal axis and the shaping tool may be moved against the inner curved surface at a force of 0.5-10.0 N per cm length of the substantially cylindrical tube.

Optionally, the deviation from the radial axis may be at an angle of approximately 90 degrees. Optionally, the shaping tool may further comprise third and fourth opposing fingers. The third and fourth opposing fingers may extend generally radially. Optionally, the method may further comprise forming a second flattened portion opposing the first flattened portion and a second curved portion opposing the first curved portion. Optionally, the method may further comprise moving the first two opposing fingers in a first direction along the radial axis, and moving the third and fourth opposing fingers in a second direction along the radial axis, to form the first and second flattened portions. Optionally, the method may further comprise moving apart the first two opposing fingers, deviating from the radial axis, and moving apart the third and fourth opposing fingers, deviating from the radial axis, to at least partially reshape the first and second curved portions. The first and second curved portions may be substantially semi-circular.

FIG. 4 shows a glass sleeve **12** that may be formed using the shaping tool **20** depicted in FIGS. 2A-2D or 3.

FIG. 5 shows a glass sleeve **12** that may be formed using the shaping tool **20** depicted in FIGS. 1A-1E or 2A-2D.

Optionally, the first flattened portion **30,** second flattened portion **34**, and other flattened portions **32, 36,** of a glass sleeve **12** may be optically flat or nearly so. For example, the deviation in flatness may be ±50 µm across a 6 cm long first flattened portion **30** of a glass sleeve **12.** The deviation in flatness may be measured by, for example, scanning confocal microscopy.

Optionally, the thickness **86** of a glass sleeve **12** across a first flattened portion **30** may be carefully maintained such that the thickness does not vary by more than ±50 µm across a 6 cm long first flattened portion **30** of a glass sleeve **12.**

Optionally, the distance **84** between two opposing flattened portions **30, 32** of a glass sleeve **12** across the length of the opposing flattened portions **30, 32** may be carefully maintained such that the distance **84** between two opposing flattened portions **30, 32** does not vary by more than ±100 µm across a 6 cm long pair of two opposing flattened portions **30, 32** of a glass sleeve **30, 32.**

Optionally, shaping tool fingers **22, 24, 26, 28** may be moved against the inner curved surface **14** such that a constant force may be applied by the shaping tool fingers **22, 24, 26, 28** to the inner curved surface **14.** The speed at which the shaping tool fingers **22, 24, 26, and 28** may be moved against the inner curved surface **14** may vary. It may be important to keep applied force beneath a critical level to prevent breaking the glass.

The force required to shape the inner curved surface **14** has been observed to be lower in a bending phase early in the process, when the primary shaping is straightening the curved perimeter between the two shaping tool ends **22, 24** and **26, 28** and bending the curved perimeter around the shaping tool fingers **22, 24, 26, 28** without substantially increasing its circumference, than in a later stretching phase in the process when stretching the perimeter and thus increasing its circumference. Thus, the force profile or rate of travel applied to the shaping tool **20** may be modified when transitioning from the bending phase to the stretching phase of the process.

Optionally, the shaping tool fingers **22, 24, 26, 28** may be moved against the inner curved surface **14** at a constant speed. Optionally, the force that may be applied by the shaping tool fingers **22, 24, 26, 28** to the inner curved surface **14** may vary. It may be important to keep applied force beneath a critical level to prevent breaking the glass.

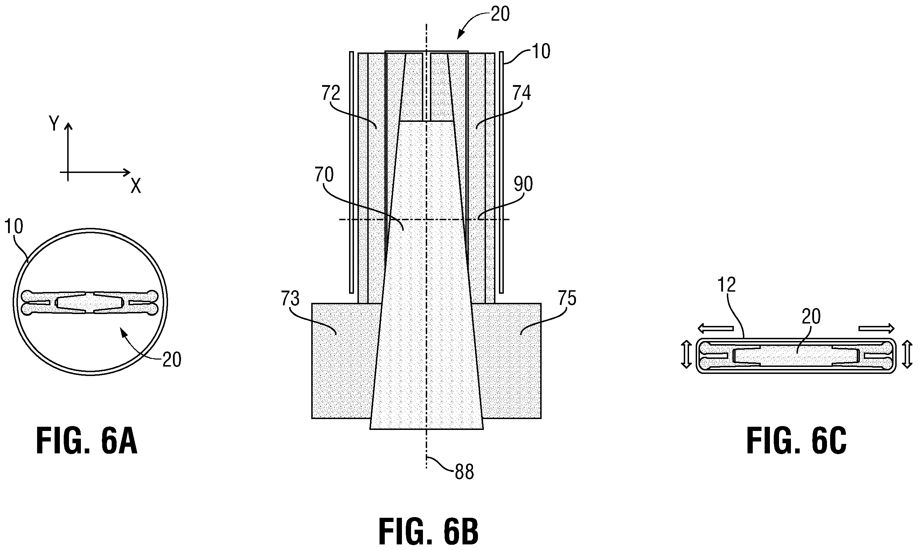

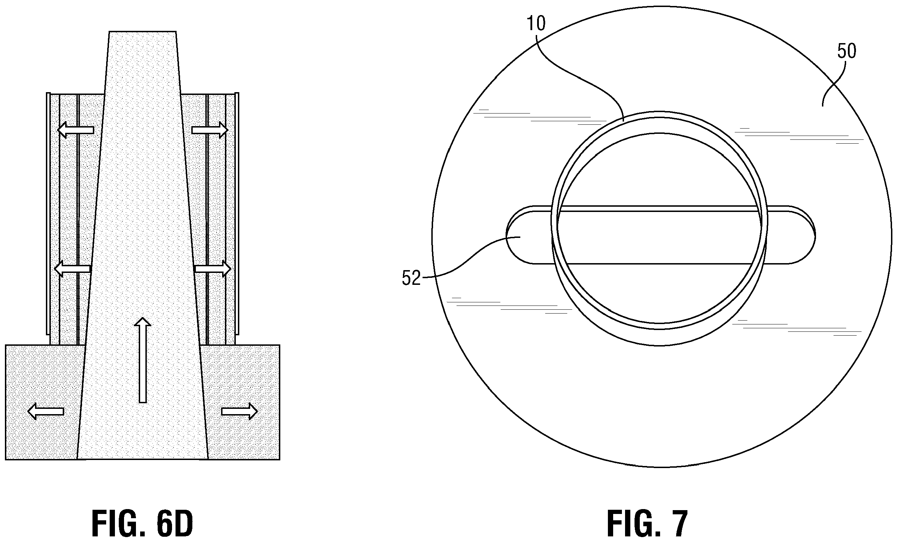

FIGS. 6A-6C show corresponding top plan and side longitudinal-section views of a shaping tool **20** inserted into a glass tube **10.** The shaping tool **20** may comprise or be connected to a first articulating device **72** and a second articulating device **74.** The bi-conical ramp **70** may move along a longitudinal axis 88 in coordination with the first and second articulating devices **72, 74,** such that the first and second articulating devices **72, 74** may repeatably and accurately drive the position of the fingertips **23, 25, 27, 29.** The bi-conical ramp **70** may drive the opening and closing of flexures **61, 62** at an angle to a radial axis 90. This angle may be along the Y axis as shown in FIG. 6A, and may constitute transversal stretching of the glass tube **10.** The first and second articulating devices **72, 74** may be mounted upon first and second stages **73, 75.** As shown in FIG. 6B, the first and second stages **73, 75** may drive the first and second articulating devices **72, 74** apart along a radial axis, such as the X axis shown in FIG. 6B, to reform the glass tube **10.**

As shown in FIG. 6B, the bi-conical ramp **70** may drive the flexures **61, 62** apart to cause transversal stretching of the glass tube **10.** FIGS. 6A-6B also show possible coordination between the bi-conical ramp **70** and the first and second articulating devices **72, 74.** For example, the bi-conical ramp may drive the opening and closing of flexures 61 and 62 along the longitudinal axis 88. The opening of flexures 61 and 62 may move reforming round tips one apart from the other, insuring glass transversal stretching along the longitudinal axis 88. The closing of flexures 61 and 62 may be forced by the bi-conical ramp in a positive relative sliding contact with rear arms of flexures 61 and 62 while the closing of flexures 61 and 62 is operated by the elastic spring back of flexures.

Although it may be possible to reform the glass tube **10** while held substantially horizontal, optionally the substantially cylindrical glass tube **10** may be reformed while held substantially vertical (i.e., with the cylindrical axis vertical) to minimize glass sagging. One possible support structure (or platform) **50** for supporting a glass tube **10** in a vertical position is depicted in FIG. 7. As shown in FIG. 7, a support structure **50** may have an opening **52** to allow entry and optionally movement of a shaping tool **20.** A support structure **50** may be made of a material with sufficient thermal properties to withstand the heating and cooling that occurs during the process of deforming the glass tube **10.**

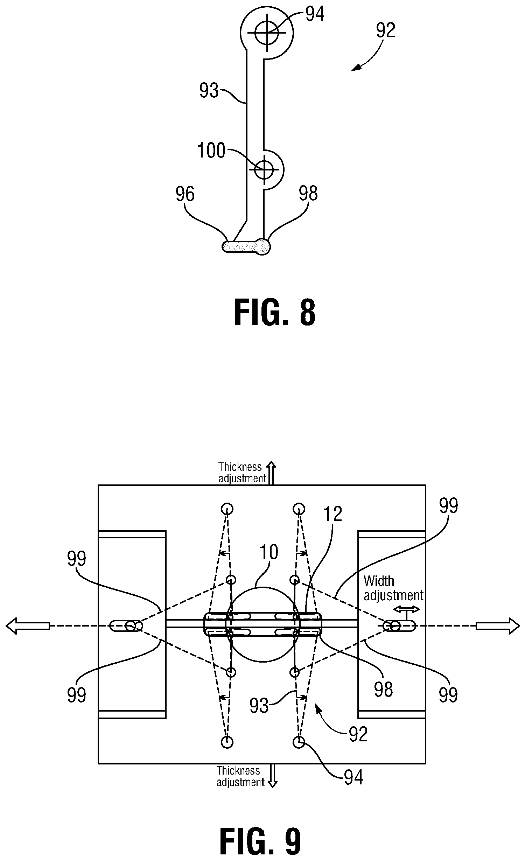

FIGS. 8-10 show another possible embodiment of the first articulating device **20** used to reform a glass tube **10** into a glass sleeve **12.** The first articulating device 20 may comprise a forming rod 92 and may be connected to a round finger 98. The forming rod 92 may include a stiffening back rib 96 and a rotation arm 93. Each forming rod 92 may have pivots 94 and 100. The rotating arms 93 may be moved around the pivots 94. The stiffening back ribs 96 may be used to increase the forming rod 92 geometrical inertia and for mechanical inertia. The mechanism for moving the rotating arms 93 includes links 99 connected to the rotating arms 93 by pivots 100. The links 99 are connected at their other ends to movable pivots 101. The movable pivots 101 are confined to travel within the slots 103 in the plates 104. The pivot 94 may be fixed to the plate 106.

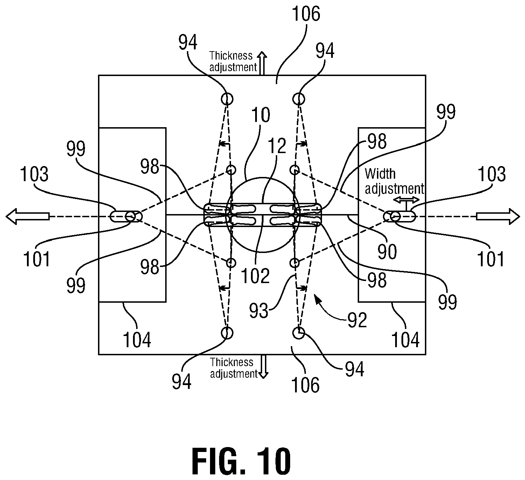

The plates 104 may not be movable toward or away from the center 102, however, the pivots 101 may be movable within the slots 103 in the plates 104 (left and right as shown in FIGS. 9 and 10) to change the beginning and end points of rotation of the rotation arms 93. Optionally, the pivots 94 can also be movable perpendicular to the rotation arm 93 (up or down as shown in FIGS. 9 and 10) by moving the plates 106 to adjust the spacing of the rotation arms 93 of each pair. The plates 104 and 106 can either be set up for given sleeve dimensions and remain stationary during the forming operation, or additional flexibility respecting the motion of the rotation arms 93 can be provided by moving the plates 106 during the forming operation.

In operation, as shown in FIG. 9, the forming rod 92 may enter the glass tube 10 without contacting and damaging the internal surface of the glass tube 10 when the glass tube 10 is heated to a temperature within the softening range of the glass. Each rotation arm 93 may be pivoted about its pivot 94 by the set of linkages 99 from an initial position (closer to the center) inside the glass tube 10 to the intermediate position (further from the center) inside the glass sleeve 12. The glass 86 (shown in FIG. 4) of glass sleeve 12 may become thinner when the glass tube 10 is stretched and is reformed to the glass sleeve 12. The set of linkages 93 on both sides of the glass tube 10 may be moved coordinately as shown by the arrows in FIGS. 9 and 10 in such a way that the glass sleeve 12 has uniform thickness throughout.

As shown in FIG. 10, the mechanism of FIG. 9 can be rearranged by moving the plates 106, respectively, to enlarge or reduce the longer or shorter internal dimensions of the sleeves 12. Specifically, FIG. 10 shows the plates 106 further apart than they are in FIG. 9, and the plates 104 the same distance apart as they are in FIG. 9. In an embodiment, the mechanism can be set up as shown in FIG. 9 to begin stretching the tube 10 essentially parallel to the radial axis 90 (left and right as shown in FIGS. 9 and 10), and the plates 106 can be shifted apart at an angle to the radial axis 90 (up and down as shown in FIGS. 9 and 10) to stretch the tube 10 up and down. Stretching at an angle to the radial axis 90 can also be effected by rotating the rotation arms 93 about the pivots 94 near their limits of travel away from the center 102, where, as illustrated, the movements of the fingers 98 about the pivots 94 also have a component perpendicular to the radial axis 90.

The articulating device having the forming rod 92 may have a mechanical part in a relatively cold area, while the forming rod 92 may be heated at the required temperature, such as 600 °C. The embodiment may not be shape dependent and the mechanical system may be tuned to have different glass stretch ratios. The embodiment may also provide a fine tuning tool to reform the glass tube. The embodiment presents a robust and reliable external machinery to fine tune a glass tube stretching and retracting of forming tools without damaging the obtained sleeve.

While aspects have been described with respect to a limited number of embodiments, those skilled in the art, having benefit of this disclosure, will appreciate that other embodiments can be devised which do not depart from the scope of the description as disclosed herein. Accordingly, the scope should be limited only by the attached claims.

## Claims

1. A method for reforming a glass sleeve (12) comprising:
a. providing a tube made of glass (10), the tube (10) having a longitudinal axis (88) and an inner surface (14) enclosing a space (16);
b. heating the tube (10) to a temperature within the softening range of the glass;
c. introducing a shaping tool (20) having at least two opposing fingers (22, 24, 26, 28) into the enclosed space (16), the opposing fingers (22, 24, 26, 28) extending radially;
d. moving the at least two opposing fingers (22, 24, 26, 28) against the inner surface (14) along a radial axis (90) to reform the tube (10), to form a first portion; and
e. moving the at least two opposing fingers (22, 24, 26, 28) apart, deviating from the radial axis (90), to reform the tube (10), to form a second portion.

2. The method of claim 1, wherein the at least two opposing fingers (22, 24, 26, 28) comprise third and fourth opposing fingers (22, 24, 26, 28), the third and fourth opposing fingers (22, 24, 26, 28) extending radially.

3. The method of claim 1, where the deviation from the radial axis (90) is at an angle of approximately 90 degrees.

4. The method of claim 2, wherein the four fingers (22, 24, 26, 28) are connected to a_forming rod (92).

5. The method of claim 2, further comprising:
moving the first two opposing fingers (22, 24, 26, 28) in a first direction along the radial axis (90),
moving the third and fourth opposing fingers (22, 24, 26, 28) in a second direction along the radial axis (90), to form the first portion and a third portion opposing the first portion;
moving apart the first two opposing fingers (22, 24, 26, 28), deviating from the radial axis (90); and
moving apart the third and fourth opposing fingers (22, 24, 26, 28), deviating from the radial axis (90), to form the second Portion and a fourth portion opposing the second portion.

6. The method of claim 1, further comprising retracting opposing fingers (22, 24, 26, 28) before removing the shaping tool (20) from the reformed tube (10) without interacting with the internal surface of the reformed tube (10).

7. The method of claim 4, wherein the forming rod (92) is attached to each individual finger (22, 24, 26, 28) by a separate pivot (94).

8. The method of claim 1, wherein the second portion is a first curved portion (40, 42) and the method further comprises forming a second flattened portion (30, 32, 34, 36) opposing the first portion and a second curved portion (40, 42) opposing the first curved portion (40, 42).

9. The method of claim 8, further comprising:
moving apart the first two opposing fingers (22, 24, 26, 28), deviating from the radial axis (90), and
moving apart the third and fourth opposing fingers (22, 24, 26, 28), deviating from the radial axis (90), to at least partially reshape the first and second curved portions (40, 42).

10. The method of claim 4, wherein the forming rod (92) comprises a rotating arm (93), wherein the rotating arm (93) is actuated by a set of linkages (99).

11. A shaping tool comprising:
a pair of opposing fingers (22, 24, 26, 28), each finger (22, 24, 26, 28) extending radially and comprising a tip configured to contact a glass surface; and
a first articulating device (72, 74) connected to a finger (22, 24, 26, 28), the articulating device (72, 74) configured to move along a radial axis (90) and deviate from the radial axis (90).

12. The shaping tool of claim 11, further comprising a bi-conical ramp (70), the bi-conical ramp (70) configured to move along a longitudinal axis (88) in coordination with the first articulating device's (72, 74) movement along the radial axis (90), wherein movement of the bi-conical ramp (70) along the longitudinal axis (88) drives the pair of opposing fingers (22, 24, 26, 28) apart, at an angle to the radial axis (90).

13. The shaping tool of claim 11, further comprising:
a second pair of opposing fingers (22, 24, 26, 28), wherein each finger (22, 24, 26, 28) extends radially and comprises a tip configured to contact a glass surface, and
a second articulating device (72, 74) connected to the second pair of opposing fingers (22, 24, 26, 28), the second articulating device (72, 74) configured to move along the radial axis (90).

14. The shaping tool of claim 11, further comprising a first and second stage (73, 75), wherein the first stage (73, 75) is connected to the first articulating device (72, 74), the second stage (73, 75) is connected to the second articulating device (72, 74), and the first and second stages (73, 75) are configured to drive the first and second articulating devices (72, 74) apart along the radial axis (90).

15. The shaping tool of claim 11, wherein the first articulating device (72, 74) comprises a forming rod (92), wherein the forming rod (92) comprises a pivot (94) and a rotating arm (93).

## Patentansprüche

1. Verfahren zum Umformen einer Glashülse (12), umfassend:
a. Bereitstellen eines Rohrs aus Glas (10), wobei das Rohr (10) eine Längsachse (88) und eine einen Raum (16) umschließende Innenfläche (14) aufweist;
b. Erhitzen des Rohrs (10) auf eine Temperatur innerhalb des Erweichungsbereichs des Glases;
c. Einführen eines Formgebungswerkzeugs (20), das mindestens zwei gegenüberliegende Finger (22, 24, 26, 28) aufweist, in den geschlossenen Raum (16), wobei sich die gegenüberliegenden Finger (22, 24, 26, 28) radial erstrecken;
d. Bewegen der mindestens zwei gegenüberliegenden Finger (22, 24, 26, 28) gegen die Innenfläche (14) entlang einer Radialachse (90), um das Rohr (10) umzuformen, um einen ersten Abschnitt zu bilden; und
e. Auseinanderbewegen der mindestens zwei gegenüberliegenden Finger (22, 24, 26, 28), von der Radialachse (90) abweichend, um das Rohr (10) umzuformen, um einen zweiten Abschnitt zu bilden.

2. Verfahren nach Anspruch 1, wobei die mindestens zwei gegenüberliegenden Finger (22, 24, 26, 28) einen dritten und vierten gegenüberliegenden Finger (22, 24, 26, 28) umfassen, wobei sich der dritte und vierte gegenüberliegende Finger (22, 24, 26, 28) radial erstrecken.

3. Verfahren nach Anspruch 1, wobei die Abweichung von der Radialachse (90) in einem Winkel von etwa 90 Grad liegt.

4. Verfahren nach Anspruch 2, wobei die vier Finger (22, 24, 26, 28) mit einem Formgebungsstab (92) verbunden sind.

5. Verfahren nach Anspruch 2, ferner umfassend:
Bewegen der ersten zwei gegenüberliegenden Finger (22, 24, 26, 28) in einer ersten Richtung entlang der Radialachse (90), Bewegen des dritten und vierten gegenüberliegenden Fingers (22, 24, 26, 28) in einer zweiten Richtung entlang der Radialachse (90), um den ersten Abschnitt und einen dem ersten Abschnitt gegenüberliegenden dritten Abschnitt zu bilden;
Auseinanderbewegen der ersten zwei gegenüberliegenden Finger (22, 24, 26, 28), von der Radialachse (90) abweichend; und
Auseinanderbewegen des dritten und vierten gegenüberliegenden Fingers (22, 24, 26, 28), von der Radialachse (90) abweichend, um den zweiten Abschnitt und einen dem zweiten Abschnitt gegenüberliegenden vierten Abschnitt zu bilden.

6. Verfahren nach Anspruch 1, ferner umfassend das Zurückziehen gegenüberliegender Finger (22, 24, 26, 28) vor dem Entfernen des Formgebungswerkzeugs (20) von dem umgeformten Rohr (10), ohne mit der inneren Oberfläche des umgeformten Rohrs (10) in Wechselwirkung zu treten.

7. Verfahren nach Anspruch 4, wobei der Formgebungsstab (92) an jedem einzelnen Finger (22, 24, 26, 28) durch einen separaten Drehpunkt (94) angebracht ist.

8. Verfahren nach Anspruch 1, wobei der zweite Abschnitt ein erster gekrümmter Abschnitt (40, 42) ist und das Verfahren ferner das Bilden eines dem ersten Abschnitt gegenüberliegenden zweiten abgeflachten Abschnitts (30, 32, 34, 36) und eines dem ersten gekrümmten Abschnitt (40, 42) gegenüberliegenden zweiten gekrümmten Abschnitts (40, 42) umfasst.

9. Verfahren nach Anspruch 8, ferner umfassend:
Auseinanderbewegen der ersten zwei gegenüberliegenden Finger (22, 24, 26, 28), von der Radialachse (90) abweichend, und
Auseinanderbewegen des dritten und vierten gegenüberliegenden Fingers (22, 24, 26, 28), von der Radialachse (90) abweichend, um den ersten und zweiten gekrümmten Abschnitt (40, 42) zumindest teilweise neu zu formen.

10. Verfahren nach Anspruch 4, wobei der Formgebungsstab (92) einen Dreharm (93) umfasst, wobei der Dreharm (93) durch einen Satz Verbindungen (99) betätigt wird.

11. Formgebungswerkzeug, umfassend:
ein Paar gegenüberliegende Finger (22, 24, 26, 28), wobei sich jeder Finger (22, 24, 26, 28) radial erstreckt und eine Spitze umfasst, die konfiguriert ist, um eine Glasoberfläche zu berühren; und
eine erste Gelenkvorrichtung (72, 74), die mit einem Finger (22, 24, 26, 28) verbunden ist, wobei die Gelenkvorrichtung (72, 74) konfiguriert ist, um sich entlang einer Radialachse (90) zu bewegen und von der Radialachse (90) abzuweichen.

12. Formgebungswerkzeug nach Anspruch 11, ferner umfassend eine doppelkonische Rampe (70), wobei die doppelkonische Rampe (70) konfiguriert ist, um sich entlang einer Längsachse (88) in Koordination mit der Bewegung der ersten Gelenkvorrichtung (72, 74) entlang der Radialachse (90) zu bewegen, wobei die Bewegung der doppelkonischen Rampe (70) entlang der Längsachse (88) das Paar gegenüberliegende Finger (22, 24, 26, 28) in einem Winkel zur Radialachse (90) auseinandertreibt.

13. Formgebungswerkzeug nach Anspruch 11, ferner umfassend:
ein zweites Paar gegenüberliegende Finger (22, 24, 26, 28), wobei sich jeder Finger (22, 24, 26, 28) radial erstreckt und eine Spitze umfasst, die konfiguriert ist, um eine Glasoberfläche zu berühren, und
eine zweite Gelenkvorrichtung (72, 74), die mit dem zweiten Paar gegenüberliegende Finger (22, 24, 26, 28) verbunden ist, wobei die zweite Gelenkvorrichtung (72, 74) konfiguriert ist, um sich entlang der Radialachse (90) zu bewegen.

14. Formgebungswerkzeug nach Anspruch 11, ferner umfassend eine erste und eine zweite Stufe (73, 75), wobei die erste Stufe (73, 75) mit der ersten Gelenkvorrichtung (72, 74) verbunden ist, die zweite Stufe (73, 75) mit der zweiten Gelenkvorrichtung (72, 74) verbunden ist und die erste und zweite Stufe (73, 75) konfiguriert sind, um die erste und die zweite Gelenkvorrichtung (72, 74) entlang der Radialachse (90) auseinanderzutreiben.

15. Formgebungswerkzeug nach Anspruch 11, wobei die erste Gelenkvorrichtung (72, 74) einen Formgebungsstab (92) umfasst, wobei der Formgebungsstab (92) einen Drehpunkt (94) und einen Dreharm (93) umfasst.

## Revendications

1. Procédé de reformage d'un manchon en verre (12) comprenant :
a. la fourniture d'un tube en verre (10), le tube (10) ayant un axe longitudinal (88) et une surface intérieure (14) enfermant un espace (16) ;
b. la chauffe du tube (10) à une température dans la plage de ramollissement du verre ;
c. l'introduction d'un outil de mise en forme (20) ayant au moins deux doigts opposés (22, 24, 26, 28) dans l'espace fermé (16), les doigts opposés (22, 24, 26, 28) s'étendant radialement ;
d. le déplacement des au moins deux doigts opposés (22, 24, 26, 28) contre la surface intérieure (14) le long d'un axe radial (90) pour reformer le tube (10), pour former une première partie ; et
e. l'éloignement des au moins deux doigts opposés (22, 24, 26, 28) l'un de l'autre, en s'écartant de l'axe radial (90), pour reformer le tube (10), pour former une deuxième partie.

2. Procédé selon la revendication 1, dans lequel les au moins deux doigts opposés (22, 24, 26, 28) comprennent des troisième et quatrième doigts opposés (22, 24, 26, 28), les troisième et quatrième doigts opposés (22, 24, 26, 28) s'étendant radialement.

3. Procédé selon la revendication 1, dans lequel l'écart par rapport à l'axe radial (90) est à un angle d'environ 90 degrés.

4. Procédé selon la revendication 2, dans lequel les quatre doigts (22, 24, 26, 28) sont connectés à une tige de formage (92).

5. Procédé selon la revendication 2, comprenant en outre :
le déplacement des deux premiers doigts opposés (22, 24, 26, 28) dans une première direction le long de l'axe radial (90), le déplacement des troisième et quatrième doigts opposés (22, 24, 26, 28) dans une deuxième direction le long de l'axe radial (90), pour former la première partie et une troisième partie opposée à la première partie ;
l'éloignement des deux premiers doigts opposés (22, 24, 26, 28), en s'écartant de l'axe radial (90) ; et
l'éloignement des troisième et quatrième doigts opposés (22, 24, 26, 28), en s'écartant de l'axe radial (90), pour former la deuxième partie et une quatrième partie opposée à la deuxième partie.

6. Procédé selon la revendication 1, comprenant en outre la rétraction des doigts opposés (22, 24, 26, 28) avant de retirer l'outil de mise en forme (20) du tube reformé (10) sans interagir avec la surface intérieure du tube reformé (10).

7. Procédé selon la revendication 4, dans lequel la tige de formage (92) est fixée à chaque doigt individuel (22, 24, 26, 28) par un pivot séparé (94).

8. Procédé selon la revendication 1, dans lequel la deuxième partie est une première partie incurvée (40, 42) et le procédé comprend en outre la formation d'une deuxième partie aplatie (30, 32, 34, 36) opposée à la première partie et d'une deuxième partie incurvée (40, 42) opposée à la première partie incurvée (40, 42).

9. Procédé selon la revendication 8, comprenant en outre :
l'éloignement des deux premiers doigts opposés (22, 24, 26, 28), en s'écartant de l'axe radial (90), et
l'éloignement des troisième et quatrième doigts opposés (22, 24, 26, 28), en s'écartant de l'axe radial (90), pour reformer au moins partiellement les première et deuxième parties incurvées (40, 42).

10. Procédé selon la revendication 4, dans lequel la tige de formage (92) comprend un bras rotatif (93), dans lequel le bras rotatif (93) est actionné par un ensemble de raccordements (99).

11. Outil de mise en forme comprenant :
une paire de doigts opposés (22, 24, 26, 28), chaque doigt (22, 24, 26, 28) s'étendant radialement et comprenant une pointe configurée pour entrer en contact avec une surface en verre ; et
un premier dispositif d'articulation (72, 74) relié à un doigt (22, 24, 26, 28), le dispositif d'articulation (72, 74) étant configuré pour se déplacer le long d'un axe radial (90) et s'écarter de l'axe radial (90).

12. Outil de mise en forme selon la revendication 11, comprenant en outre une rampe bi-conique (70), la rampe bi-conique (70) configurée pour se déplacer le long d'un axe longitudinal (88) en coordination avec le mouvement du premier dispositif d'articulation (72, 74) le long l'axe radial (90), dans lequel le mouvement de la rampe bi-conique (70) le long de l'axe longitudinal (88) entraîne l'éloignement de la paire de doigts opposés (22, 24, 26, 28), selon un angle par rapport à l'axe radial (90).

13. Outil de mise en forme selon la revendication 11, comprenant en outre :
une deuxième paire de doigts opposés (22, 24, 26, 28), dans lequel chaque doigt (22, 24, 26, 28) s'étend radialement et comprend une pointe configurée pour entrer en contact avec une surface en verre, et
un deuxième dispositif d'articulation (72, 74) connecté à la deuxième paire de doigts opposés (22, 24, 26, 28), le deuxième dispositif d'articulation (72, 74) étant configuré pour se déplacer le long de l'axe radial (90).

14. Outil de mise en forme selon la revendication 11, comprenant en outre un premier et un deuxième étage (73, 75), dans lequel le premier étage (73, 75) est connecté au premier dispositif d'articulation (72, 74), le deuxième étage (73, 75) est connecté au deuxième dispositif d'articulation (72, 74), et les premier et deuxième étages (73, 75) sont configurés pour entraîner l'éloignement des premier et deuxième dispositifs d'articulation (72, 74) le long de l'axe radial (90).

15. Outil de mise en forme selon la revendication 11, dans lequel le premier dispositif d'articulation (72, 74) comprend une tige de formage (92), dans lequel la tige de formage (92) comprend un pivot (94) et un bras rotatif (93).
